# FASCICULE DE BREVET EUROPEEN

(11) **EP 1 675 765 B1**
(45) Date de publication et mention de la délivrance du brevet: **22.12.2010**
(21) Numéro de dépôt: 04805741.8
(22) Date de dépôt: 11.10.2004
(51) Int. Cl.: B62D 25/04

(54) **STRUCTURE DE PIED MILIEU POUR VEHICULE AUTOMOBILE**
MITTELSÄULENKONSTRUKTION FÜR EIN KRAFTFAHRZEUG
CENTER PILLAR STRUCTURE FOR A MOTOR VEHICLE

(30) Priorité: 13.10.2003 FR 0311945
(43) Date de publication de la demande: 05.07.2006
(73) Titulaire: RENAULT S.A.S., 92100 Boulogne Billancourt (FR)
(72) Inventeur: JAMOIS, Jean Marc, F-95870 BEZONS (FR)
(86) Numéro de dépôt international: PCT/FR2004/050498
(87) Numéro de publication internationale: WO 2005/037630

(56) Documents cités:
- EP-A- 1 190 938
- EP-A- 1 234 750
- WO-A-01/70557
- DE-A- 10 037 494
- DE-A- 10 162 741
- DE-A- 10 249 117
- DE-A- 19 805 804
- PATENT ABSTRACTS OF JAPAN vol. 007, no. 104 (M-212), 6 mai 1983 (1983-05-06) -& JP 58 026677 A (TOYO KOGYO KK), 17 février 1983 (1983-02-17)

## Description

L'invention concerne une structure de pied milieu pour un véhicule automobile.

Une telle structure s'étend sensiblement verticalement entre la porte avant et, soit la porte arrière pour un véhicule cinq portes, soit l'aile latérale arrière pour un véhicule trois portes.

Les pieds milieux comprennent généralement une partie extérieure de carrosserie, appelée côté de caisse et une partie de renfort qui s'étend généralement sur la majeure partie de la hauteur du côté de caisse et qui est placée dans ce dernier.

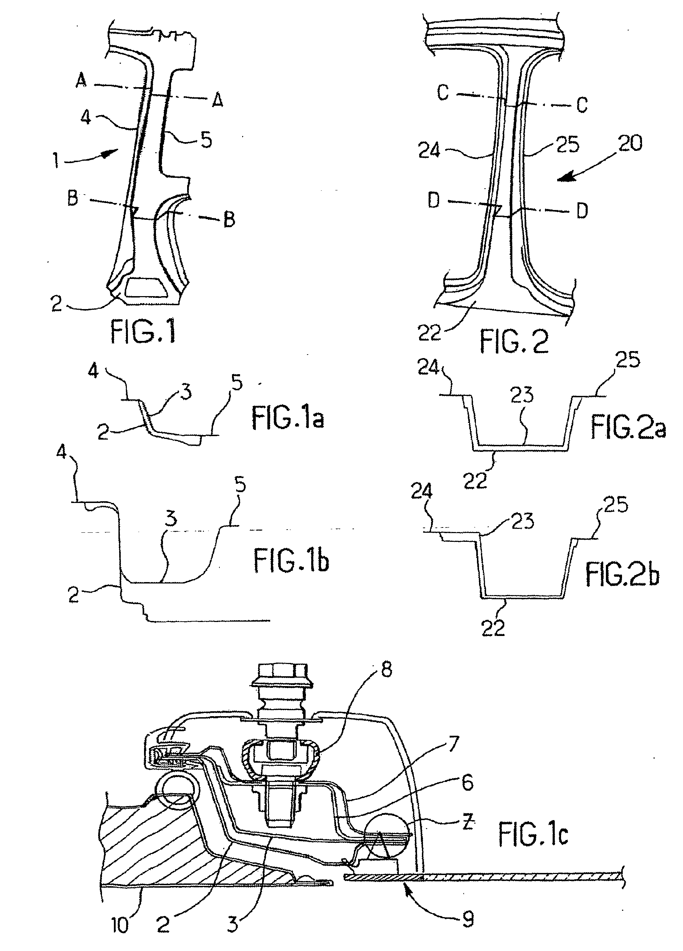

Un exemple de pied milieu utilisé actuellement pour un véhicule trois portes est représenté en perspective vu de l'extérieur du véhicule sur les figures 1, 1a, 1b. Le pied de milieu 1 représenté comprend un côté de caisse 2 et un premier renfort 3. A hauteur de la vitre de custode, c'est-à-dire dans leur partie supérieure, le côté de caisse 2 et le premier renfort 3 présentent une section transversale sensiblement en forme de marche d'escalier tel que visible sur la coupe transversale de la figure 1a. En revanche, tel que visible sur la vue en coupe transversale de la figure 1b, sur la partie inférieure du pied de milieu, le premier renfort 3 présente une section transversale en Oméga (Ω), le côté de caisse 2 présentant toujours sensiblement une section en forme de marche d'escalier. Les bords longitudinaux 4 et 5 dirigés respectivement vers l'avant et l'arrière du véhicule présentent ainsi une forme différente, le bord longitudinal arrière 5 du renfort présentant par ailleurs une forme différente dans ses parties supérieure et inférieure. La forme de la partie supérieure permet de placer la vitre de custode sensiblement dans un même plan que la partie inférieure du côté de caisse, la vitre de custode étant fixée sur le bord longitudinal arrière 5 du côté extérieur.

Une telle forme du pied de milieu présente l'inconvénient de ne pas offrir une résistance optimale sous l'effet d'un choc transversal, dû à la rupture d'inertie entre la partie supérieure et la partie inférieure du pied milieu. Il est alors nécessaire de prévoir des pièces de renfort supplémentaires représentées sur la vue en coupe transversale de la figure 1c. Ainsi, un deuxième renfort 6 et un troisième renfort 7, encore appelé doublure de custode, sensiblement de même forme, sont fixés sur le premier renfort 3 du côté opposé au côté de caisse 1. Ils présentent tous les deux une section transversale sensiblement en tonne de marche d'escalier et leurs bords latéraux rejoignent les bords latéraux du premier renfort 3, de manière à ce que l'ensemble des renforts 3 et 6 présente une section de forme sensiblement rectangulaire. Cet agencement permet de renforcer la résistance aux chocs latéraux et de fixer un rail de ceinture de sécurité 8. Vers l'arrière du véhicule, les différents renforts 3 à 7 et le côté de caisse 2 sont étirés de manière à être soudés ensemble dans la zone Z et de servir de support à la vitre de custode 9, qui est alors sensiblement dans le même plan que le panneau de porte avant 10 et le bas du côté de caisse (non visible).

Toutefois, étant donné qu'un soudage optimal est obtenu pour un maximum de trois épaisseurs de métal, il s'avère nécessaire de réaliser ponctuellement des découpes dans les différents renforts afin de ramener les quatre épaisseurs à trois épaisseurs de soudage. Ces découpes présentent l'inconvénient de fragiliser le pied milieu. Une telle structure ne présente pas une résistance aux chocs latéraux aussi élevée que les pieds milieux utilisés pour les véhicules cinq portes.

Un exemple de pied milieu utilisé pour un véhicule cinq portes est représenté en perspective sur la figure 2. Le pied milieu 20 comprend un côté de caisse 22 et une pièce de renfort 23 présentant chacun une section transversale en Ω dont l'ouverture est dirigée vers l'intérieur du véhicule. Cette forme particulière est visible sur les coupes des figures 2a et 2b.

La conception d'un tel pied milieu offre une plus grande résistance aux chocs latéraux mais ne peut être utilisée pour un véhicule trois portes pour les raisons suivantes. Dans un véhicule cinq portes, les portes avant et arrière étant sensiblement les mêmes, les bords longitudinaux latéraux 24 et 25 du pied milieu, vers l'avant et l'arrière du véhicule respectivement, présentent une forme sensiblement identique et la section transversale reste sensiblement la même sur quasiment toute la hauteur du pied milieu. Une telle forme en Ω n'est pas compatible avec la fixation de la vitre de custode dans le même plan que le côté de caisse et que l'extérieur de la porte avant, la vitre de custode étant fixée sur le bord longitudinal arrière 25. Il faudrait pour cela que la partie supérieure du bord longitudinal arrière du côté de caisse 22 soit ramenée au même niveau que la partie basse du côté de caisse. Jusqu'à présent, une telle forme n'a jamais été réalisée en raison de la complexité de sa réalisation, notamment par emboutissage. Le document DE 198 05 804 A décrit une structure de pied milieu pour véhicule selon le préamble de le revendication 1.

L'invention vise à pallier ces inconvénients en proposant un pied de milieu présentant une résistance plus importante aux chocs. Le pied milieu selon l'invention présente également l'avantage d'être compact et de ne pas présenter un poids supérieur aux pieds milieu actuels. Il est particulièrement adapté aux véhicules trois portes mais peut être aménagé pour les véhicules cinq portes.

A cet effet, l'objet de l'invention concerne une structure de pied milieu pour véhicule automobile, comprenant un côté de caisse pourvu d'un renfort comportant chacun une partie allongée et une extrémité supérieure formant sensiblement un T avec la partie allongée, le renfort présentant au moins dans sa partie allongée une section transversale sensiblement en forme de Oméga (Ω) formant ainsi une cavité ouverte sur sensiblement toute sa longueur, et la partie allongée du côté de caisse présentant une section semblable au moins dans sa partie supérieure, le renfort étant placé dans la cavité du côté de caisse, où à proximité de l'extrémité supérieure du pied milieu, au moins un côté de la structure présente une partie déformée dans laquelle les deux bords longitudinaux dudit renfort et dudit côté de caisse formés par l'un des pieds du Ω sont progressivement ramenés dans le plan contenant le sommet du Ω jusqu'à être sensiblement dans ce plan au niveau de leur extrémité supérieure.

Avantageusement les bords longitudinaux du renfort, formés par les pieds du Ω, sont solidarisés sur sensiblement toute leur longueur aux bords longitudinaux correspondants du côté de caisse. Il n'y a alors pas de faiblesse au niveau de la soudure.

Avantageusement, la structure comprend un deuxième renfort s'étendant longitudinalement à l'intérieur de la cavité du premier renfort, ceci afin de renforcer davantage la structure sans en augmenter l'encombrement. Plus particulièrement, le deuxième renfort présente une section transversale sensiblement en forme de U.

Avantageusement, la structure comprend un support longitudinal sensiblement plat dont les bords latéraux sont solidaires du renfort afin de fermer la cavité de ce dernier. En particulier, le support est apte à supporter un rail de glissière pour ceinture de sécurité.

Avantageusement, la partie déformée est destinée à être dirigée vers l'arrière d'un véhicule trois portes et à permettre la fixation d'une vitre. Il est alors possible de fixer la vitre sensiblement dans un même plan que la porte avant du véhicule. En particulier, dans la partie inférieure de la structure, le côté de caisse présente une section transversale sensiblement en forme de marche d'escalier, la zone de transition avec la section en Ω présentant une déformation similaire à ladite partie déformée.

Dans un mode de réalisation, les parties déformées du côté de caisse et du renfort sont des pièces distinctes fixées sur le côté de caisse et le renfort respectivement. L'invention concerne également l'utilisation pour un véhicule trois portes d'une structure de pied milieu selon l'invention réalisée à partir d'un renfort destiné à un véhicule cinq portes et auquel sont fixées les parties déformées précédentes.

L'invention est maintenant décrite en référence aux dessins annexés, non limitatifs, dans lesquels :
- la figure 1 est une vue en perspective d'une structure de pied milieu pour véhicule trois portes selon l'art antérieur ;
- les figures 1a et 1b sont des vues schématiques en coupe transversale du pied milieu de la figure 1 selon les lignes A-A et B-B respectivement,
- la figure 1c est une vue en coupe transversale détaillée de la figure la représentant le pied milieu et son environnement ;
- la figure 2 est une vue en perspective d'une structure de pied milieu pour véhicule cinq portes selon l'art antérieur ;
- les figures 2a et 2b sont des vues schématiques en coupe transversale du pied milieu de la figure 2 selon les lignes C-C et D-D respectivement ;
- la figure 3 est une vue en perspective d'un côté de caisse comportant une structure de pied milieu selon l'invention ;
- la figure 4 est une vue agrandie de la partie supérieure de la figure 3 ;
- la figure 5 est une vue en perspective d'un renfort pour une structure de pied milieu selon l'invention ;
- la figure 6 est une vue agrandie de 1a partie supérieure de la figure 5 ;
- la figure 7 est une vue en coupe transversale de la partie supérieure d'une structure de pied milieu selon l'invention et de son environnement.

Les figures 1, la-c, 2, 2a-b ont déjà été décrites et ne seront pas exposées à nouveau.

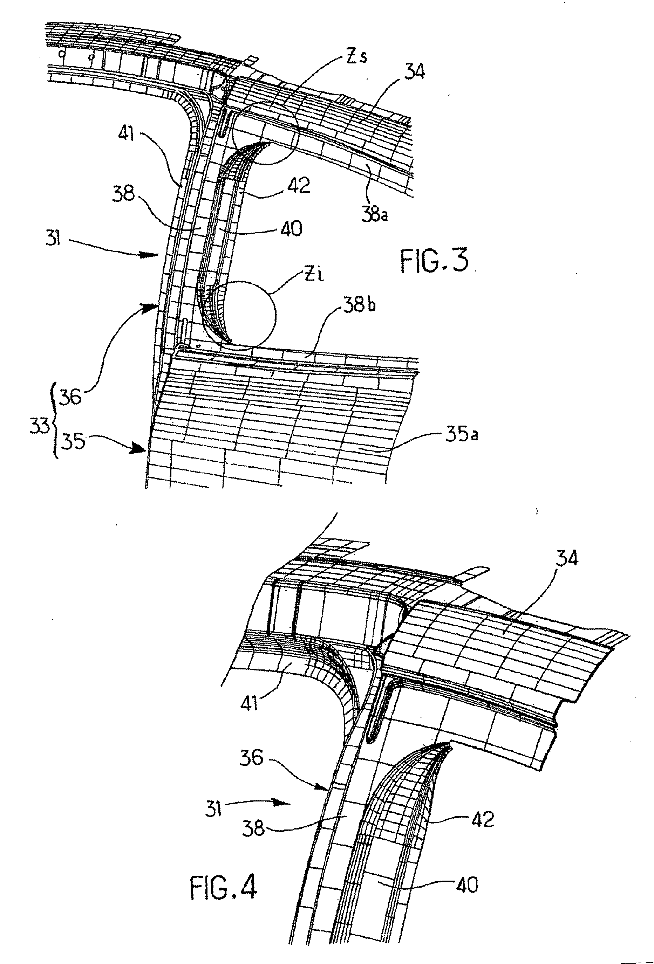

L'invention sera décrite en référence aux figures 3 à 7, lesquelles se rapportent à une structure de pied milieu pour un véhicule trois portes.

Le pied milieu 30 selon l'invention comprend un côté de caisse 31 et un renfort 32.

Le côté de caisse 31 présente une partie allongée 33 s'étendant longitudinalement et une extrémité supérieure 34 formant sensiblement un T avec la partie allongée 33. Cette dernière comprend une partie inférieure 35 et une partie supérieure 36.

La partie inférieure 35 se prolonge latéralement sensiblement verticalement vers l'arrière du véhicule pour former l'aile latérale 35a. La partie inférieure 35 présente une section transversale en forme de marche d'escalier sensiblement identique à celle d'un pied milieu usuel, tel que représenté sur la figure 1b.

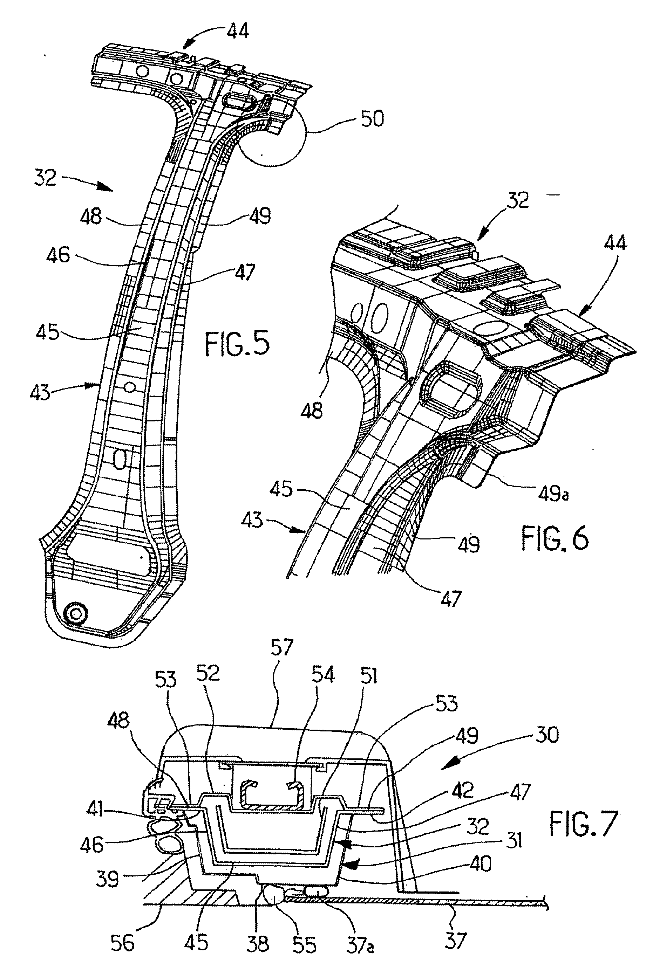

La partie supérieure 36 est destinée à supporter un bord latéral vertical d'une vitre de custode 37. Cette dernière, visible sur la figure 7, se situe sensiblement dans le même plan que la porte avant 56. La section transversale de la partie supérieure 36 présente sensiblement une forme de Oméga (Ω), tel que visible sur la coupe de la figure 7. La partie supérieure 36 présente ainsi une face 38 correspondant au sommet du Oméga, deux faces latérales 39 et 40 inclinées par rapport à la face 38 et se terminant chacune par un bord latéral 41, 42 respectivement. Les bords latéraux 41, 42 sont dirigés vers l'extérieur, sensiblement parallèlement à la face 38 et forment les pieds du Oméga. La face 38, sensiblement plane sert de support à la vitre de custode 37 par l'intermédiaire d'un joint 37a, par exemple un joint de collage. Elle se prolonge en 38a le long du bord inférieur de l'extrémité supérieure 34 du côté de caisse et en 38b le long du bord supérieur de l'aile 35a.

Le bord latéral 42 dirigé vers l'arrière du véhicule, c'est-à-dire vers la vitre de custode 37, présente des zones déformées supérieure Zs et inférieure Zi à proximité de l'extrémité supérieure 34 du côté de caisse et de l'aile 35a respectivement, au niveau de leur transition avec la partie allongée supérieure 36. Dans ces zones, le bord latéral 42 est arrondi et déformé progressivement de manière à se trouver sensiblement dans le même plan que celui des faces 38a, 38b, la face latérale 40 correspondante étant également déformée.

Le renfort 32 est maintenant décrit en référence aux figures 5 à 7. Il présente une partie allongée 43 s'étendant sensiblement verticalement et une extrémité supérieure 44 formant sensiblement un T avec la partie allongée 43. Sur toute sa hauteur, la partie allongée 43 présente une section transversale sensiblement en forme de Oméga, tel que représenté figure 7. Ainsi, la partie allongée présente une face 45 formant le sommet du Oméga, deux faces 46, 47 s'étendant inclinées à partir des bords longitudinaux de la face 45, et deux bords latéraux 48 et 49 s'étendant depuis les bords des faces 46, 47 respectivement, vers l'extérieur et sensiblement parallèlement à la face 45. Ces bords latéraux 48, 49 forment les pieds du Oméga s'étendant respectivement vers l'avant et vers l'arrière du véhicule.

Dans les zones de transition entre la partie allongée 43 et l'extrémité supérieure 44, les bords latéraux 48 et 49 présentent un arrondi. Plus particulièrement, le bord latéral arrière 49 présente une déformation dans cette zone 50, agrandie sur la figure 6. Le bord latéral arrière 49 est déformé dans cette zone de sorte qu'au niveau de l'extrémité 44, son extrémité 49a se situe sensiblement dans le même plan que la face 45. La section transversale du renfort est alors également en forme de marche d'escalier (figure 6).

L'assemblage du renfort au côté de caisse est maintenant décrit en référence à la figure 7. La partie allongée 43 du renfort est tout d'abord placée dans la cavité formée par la forme en Oméga de la partie allongée correspondante 33 du côté de caisse, les ouvertures des deux parties allongées étant dirigées dans la même direction. Les bords latéraux du renfort 48, 49 et du côté de caisse 39, 40 sont placés les uns sur les autres et sont soudés ensemble. Au niveau des extrémités supérieures du renfort 44 et du côté de caisse 34, le bord latéral 49 déformé du renfort est soudé contre la face 38a du côté de caisse.

Le pied milieu comprend en outre un renfort supplémentaire allongé 51, sensiblement en forme de U évasé, et placé quasiment entièrement dans la cavité en forme de Oméga de la partie allongée 43 du renfort. Ce renfort 51 est fixé à ses extrémités inférieure et supérieure au pied milieu et est également fixé sur la face interne du renfort 32 en oméga, par exemple par différents points de soudure (non représenté). Il permet ainsi de renforcer la structure de pied milieu sans augmenter son encombrement. Au-dessus du renfort 32, est fixé un support 52, encore appelé doublure de custode, qui se présente sous la forme d'une pièce allongée sensiblement plane obturant la cavité du renfort 32. Les bords 53 du support 52 reposent sur les bords latéraux du renfort 32 et sont soudés sur ce dernier.

La doublure de custode 52 permet de fixer un rail 54 destiné à recevoir la ceinture de sécurité.

La face 38 de la partie supérieure 36 du côté de caisse reçoit, sur son côté dirigé vers l'arrière du véhicule, le joint 37a auquel est collée la vitre de custode 37. Ce joint 37a s'étend également vers l'arrière du véhicule sur les faces 38a et 38b prolongeant la face 38.

Un autre joint 55 disposé sur l'autre côté de la face 38 permet de recevoir le bord de la porte latérale avant 56. Ce joint 55 permet de dissimuler, lors de l'ouverture de la porte latérale avant 56, les moyens de fixation et d'étanchéité de la vitre de custode 37. Un cache 57 recouvre l'ensemble du pied milieu du côté de l'intérieur du véhicule.

Les zones déformées du côté de caisse et du renfort peuvent être obtenues par emboutissage ou tout autre procédé adéquat.

Ainsi, la structure de pied milieu selon l'invention permet d'obtenir un pied milieu pour véhicules trois portes avec un nombre de pièces limité, en raison de l'encastrement des différents renforts. Dans un mode de réalisation non représenté, il est possible, pour la même épaisseur et le même nombre de pièces, de modifier la position du deuxième renfort 51 pour qu'il puisse servir d'appui à la zone de fixation du rail 54.

La structure de pied milieu selon l'invention présente également une résistance accrue aux chocs en raison d'une part de la forme en Oméga du renfort 32 sensiblement sur toute sa longueur, et d'autre part de l'absence de découpes dans les bords latéraux des différentes pièces, les bords étant soudés sur toute leur longueur.

Dans le mode de réalisation représenté, la largeur de la face 45 du renfort 32 est légèrement inférieure à la largeur de la face 38 du côté de caisse. Cette largeur peut toutefois être de plus faible dimension, la largeur de l'un ou des deux bords latéraux étant alors augmentée en conséquence, en fonction de la résistance souhaitée ou de l'encombrement souhaité.

De manière similaire aux pieds milieux existant, la profondeur de la structure de pied milieu selon l'invention présente une profondeur plus importante dans sa partie inférieure que dans sa partie supérieure. Une autre forme peut toutefois-être utilisée selon les besoins.

Le mode de réalisation décrit est relatif à un pied milieu formé d'un côté de caisse 31 monopièce et d'un renfort 32 monopièce. Il sera compris que la face latérale 40, et son bord latéral associé 42, du côté de caisse peut être emboutie séparément puis assemblée aux faces 38, 38a et 38b du côté de caisse. De même, la face latérale 47, et son bord latéral associé 49, du renfort 32 peut être emboutie séparément puis assemblée à la face 45 du renfort. Les formes du renfort 32 et du côté de caisse 31 seront alors complémentaires et adaptées pour un véhicule trois portes. En modifiant les formes des parties embouties séparément, le renfort 32 et le côté de caisse 31 peuvent être adaptés pour un véhicule cinq portes. Ou encore, on peut envisager un renfort 32 de forme similaire au renfort représenté figure 2 et destiné à un véhicule cinq portes, sur lequel on vient fixer une partie déformée 50 au niveau de son bord latéral 47 supérieur. De même, la ou les parties déformées Zs et Zi du côté de caisse 31 peuvent être fixées sur un côté de caisse adapté à l'origine pour un véhicule cinq portes. Le renfort et le côté de caisse sont alors monopièce pour un véhicule cinq portes et bi-pièces pour un véhicule trois portes.

Ainsi, l'utilisation d'une structure de pied milieu selon l'invention permet d'envisager la mise en place d'un renfort de pied milieu standard pour les véhicules trois ou cinq portes.

D'habitude, pour un véhicule cinq portes, le pied milieu est incliné vers l'arrière (de bas en haut), et est plutôt vertical pour un véhicule trois portes : on peut envisager des pieds milieu comprenant un renfort 32 standard qui présente une inclinaison intermédiaire et compatible avec les véhicules trois et cinq portes, le côté de caisse trois portes 31 étant par la suite monté sur le renfort 32 avec la modification ou l'ajout des pièces décrites dans les paragraphes précédents et correspondant à la partie supérieure 36 du côté de caisse 31, comprenant les parties déformées Zs et Zi, et la zone 50 du renfort 32.

## Revendications

1. Structure de pied milieu pour véhicule automobile, comprenant un côté de caisse (31) pourvu d'un renfort (32) comportant chacun une partie allongée (33, 43) et une extrémité supérieure (34, 44) formant sensiblement un T avec la partie allongée (33, 43), le renfort présentant au moins dans sa partie allongée (43) une section transversale sensiblement en forme de Oméga formant ainsi une cavité ouverte sur sensiblement toute sa longueur, et la partie allongée du côté de caisse (33) présentant une section semblable au moins dans sa partie supérieure, le renfort étant placé dans la cavité du côté de caisse, **caractérisé en ce qu'**à proximité de l'extrémité supérieure du pied milieu, au moins un côté de la structure présente une partie déformée (Zs, 50) dans laquelle les bords longitudinaux dudit renfort (49) et dudit côté de caisse (42) formés par l'un des pieds du oméga sont progressivement ramenés dans le plan contenant le sommet du Oméga **(45)** jusqu'à être sensiblement dans ce plan au niveau des extrémités supérieures (34, 44).

2. Structure selon la revendication 1, **caractérisée en ce que** les bords longitudinaux du renfort (41, 42), formés par les pieds du Oméga, sont solidarisés sur sensiblement toute leur longueur aux bords longitudinaux correspondants du côté de caisse (48, 49).

3. Structure selon la revendication 1 ou 2, **caractérisée en ce qu'**elle comprend un deuxième renfort (51) s'étendant longitudinalement à l'intérieur de la cavité du premier renfort (32).

4. Structure selon la revendication 3, **caractérisée en ce que** le deuxième renfort (51) présente une section transversale sensiblement en forme de U.

5. Structure selon l'une des revendications 1 à 4, **caractérisée en ce qu'**elle comprend un support (52) longitudinal sensiblement plat dont les bords latéraux (53) sont solidaires du renfort (32) afin de fermer la cavité de ce dernier.

6. Structure selon la revendication 5, **caractérisée en ce que** le support (52) est apte à supporter un rail de glissière (54) pour ceinture de sécurité.

7. Structure selon l'une des revendications 1 à 6, **caractérisée en ce que** la partie déformée (Zs, 50) est destinée à être dirigée vers l'arrière d'un véhicule trois portes et à permettre la fixation d'une vitre.

8. Structure selon la revendication 7, **caractérisée en ce que** dans la partie inférieure, le côté de caisse présente une section transversale sensiblement en forme de marche d'escalier, la zone de transition avec la section en Oméga présentant une déformation (Zi) similaire à ladite partie déformée (Zs, 50).

9. Structure selon l'une des revendications 1 à 8, **caractérisée en ce que** les parties déformées (Zs, 50) du côté de caisse (31) et du renfort (32) sont des pièces distinctes fixées sur le côté de caisse (31) et le renfort (32) respectivement.

10. Véhicule trois portes utilisant une structure de pied milieu selon la revendication 9 réalisée à partir d'un renfort (32) destiné à un véhicule cinq portes.

## Claims

1. Centre pillar structure for a motor vehicle, comprising a body side (31) provided with a reinforcement (32), each comprising an elongate part (33, 43) and an upper end (34, 44), the latter forming an approximate T with the elongate part (33, 43), the reinforcement having in at least its elongate part (43) an approximately omega-shaped cross section, thus forming a cavity which is open along approximately its full length and the elongate part of the body side (33) having a similar cross section in at least its upper part and the reinforcement being located in the cavity of the body side, which structure is **characterized in that** towards the upper end of the centre pillar, at least one side of the structure has a deformed part (Zs, 50) in which the longitudinal edges of said reinforcement (49) and of said body side (42) that are formed by one of the legs of the omega are gradually brought into the plane containing the crown of the omega (45) until it is approximately in this plane at the upper ends (34, 44).

2. Structure according to Claim 1, **characterized in that** the longitudinal edges (41, 42) of the reinforcement formed by the legs of the omega are fixed along their full or almost their full length to the corresponding longitudinal edges (48, 49) of the body side.

3. Structure according to Claim 1 or 2, **characterized in that** it comprises a second reinforcement (51) extending longitudinally along the inside of the cavity of the first reinforcement (32).

4. Structure according to Claim 3, **characterized in that** the second reinforcement (51) has an approximately U-shaped cross section.

5. Structure according to one of Claims 1 to 4, **characterized in that** it comprises an approximately flat longitudinal support (52) whose lateral edges (53) are fixed to the reinforcement (32) in order to close the cavity of the latter.

6. Structure according to Claim 5, **characterized in that** the support (52) is capable of supporting a slide rail (54) for a seat belt.

7. Structure according to one of Claims 1 to 6, **characterized in that** the deformed part (Zs, 50) is intended to be directed towards the rear of a three-door vehicle and to allow a window to be affixed.

8. Structure according to Claim 7, **characterized in that** the lower part of the body side has an approximately step-shaped cross section, the zone of transition with the omega-shaped cross section presenting a deformation (Zi) similar to said deformed part (Zs, 50).

9. Structure according to one of Claims 1 to 8, **characterized in that** the deformed parts (Zs, 50) of the body side (31) and of the reinforcement (32) are separate components attached to the body side (31) and the reinforcement (32), respectively.

10. Three-door vehicle using a centre pillar structure according to Claim 9 produced from a reinforcement (32) designed for a five-door vehicle.

## Patentansprüche

1. Kraftfahrzeugmittelsäulenkonstruktion mit einer Aufbauseite (31), die mit einer Verstärkung (32) versehen ist, die jeweils einen länglichen Teil (33, 43) und ein oberes Ende (34, 44) umfassen, das mit dem länglichen Teil (33, 43) im Wesentlichen ein T bildet, wobei die Verstärkung mindestens in ihrem länglichen Teil (43) einen im Wesentlichen omegaförmigen Querschnitt aufweist und somit über im Wesentlichen ihre gesamte Länge einen offenen Hohlraum bildet, und wobei der längliche Teil der Aufbauseite (33) mindestens an seinem oberen Teil einen ähnlichen Querschnitt aufweist, wobei die Verstärkung in den Hohlraum der Aufbauseite platziert ist, **dadurch gekennzeichnet, dass** mindestens eine Seite der Konstruktion in der Nähe des oberen Endes der Mittelsäule einen deformierten Teil (Zs, 50) aufweist, in dem die Längsränder der Verstärkung (49) und der Aufbauseite (42), die von einem der Schenkel des Omega gebildet werden, allmählich in die den Scheitel des Omega (45) enthaltende Ebene gebracht werden, bis sie sich auf der Höhe der oberen Enden (34, 44) im Wesentlichen in dieser Ebene befinden.

2. Konstruktion nach Anspruch 1, **dadurch gekennzeichnet, dass** die von den Schenkeln des Omega gebildeten Längsränder der Verstärkung (41, 42) über im Wesentlichen ihre gesamte Länge fest mit den entsprechenden Längsrändern der Aufbauseite (48, 49) verbunden sind.

3. Konstruktion nach Anspruch 1 oder 2, **dadurch gekennzeichnet, dass** sie eine zweite Verstärkung (51) umfasst, die sich in Längsrichtung im Innern des Hohlraums der ersten Verstärkung (32) erstreckt.

4. Konstruktion nach Anspruch 3, **dadurch gekennzeichnet, dass** die zweite Verstärkung (51) einen im Wesentlichen U-förmigen Querschnitt hat.

5. Konstruktion nach einem der Ansprüche 1 bis 4, **dadurch gekennzeichnet, dass** sie eine im Wesentlichen flache Längsstütze (52) umfasst, deren Seitenränder (53) fest mit der Verstärkung (32) verbunden sind, um deren Hohlraum zu schließen.

6. Konstruktion nach Anspruch 5, **dadurch gekennzeichnet, dass** die Stütze (52) geeignet ist, eine Gleitschiene (54) für einen Sicherheitsgurt zu stützen.

7. Konstruktion nach einem der Ansprüche 1 bis 6, **dadurch gekennzeichnet, dass** der deformierte Teil (Zs, 50) dazu bestimmt ist, zum hinteren Teil eines dreitürigen Fahrzeugs zu weisen und die Befestigung eines Fensters zu gestatten.

8. Konstruktion nach Anspruch 7, **dadurch gekennzeichnet, dass** die Aufbauseite am unteren Teil einen im Wesentlichen treppenstufenförmigen Querschnitt aufweist, wobei der Übergangsbereich mit omegaförmigen Querschnitt eine Deformation (Zi) aufweist, die dem deformierten Teil (Zs, 50) ähnlich ist.

9. Konstruktion nach einem der Ansprüche 1 bis 8, **dadurch gekennzeichnet, dass** die deformierten Teile (Zs, 50) der Aufbauseite (31) und der Verstärkung (32) individuelle Teile sind, die an der Aufbauseite (31) bzw. an der Verstärkung (32) befestigt sind.

10. Dreitüriges Fahrzeug, bei dem eine Mittelsäulenkonstruktion nach Anspruch 9 verwendet wird, die aus einer für ein fünftüriges Fahrzeug bestimmten Verstärkung (32) realisiert ist.
